# FASCICULE DE BREVET EUROPEEN

(11) **EP 1 170 873 B1**
(45) Date de publication et mention de la délivrance du brevet: **03.11.2004**
(21) Numéro de dépôt: 01202546.6
(22) Date de dépôt: 02.07.2001
(51) Int. Cl.: H04B 1/04, H04L 27/20, H04B 5/00

(54) **Emetteur de signaux FSK a phase cohérent**
Phasekohärenter FSK-Sender
Phase coherent FSK transmitter

(30) Priorité: 03.07.2000 FR 0008617
(43) Date de publication de la demande: 09.01.2002
(73) Titulaire: VALEO SECURITE HABITACLE S.A.S., 94042 Créteil Cédex (FR)
(72) Inventeur: Etter, Stephane, 91190 Gif sur Yvette (FR)
(74) Mandataire: Rosolen-Delarue, Katell

(56) Documents cités:
- EP-A- 0 529 986
- US-A- 4 500 751
- US-A- 4 665 399
- US-A- 5 030 928

## Description

L'invention concerne un circuit pilote d'antenne destiné à appliquer aux bornes d'une antenne émettrice une tension d'excitation qui est une succession d'oscillations à une première fréquence et d'oscillations à une seconde fréquence.

Un tel circuit est plus particulièrement destiné à piloter une antenne émettrice d'un système d'accès dit "mains libres" à un véhicule, un tel système permettant de commander le verrouillage ou le déverrouillage d'ouvrants du véhicule et/ou le démarrage du véhicule. Un tel système est constitué d'un dispositif de reconnaissance équipant le véhicule, apte à communiquer à distance avec un organe d'identification portatif qui est porté par un utilisateur-du véhicule. Le dispositif de reconnaissance d'un tel système est capable d'émettre un champ magnétique périodique au moyen d'un pilote d'antenne, pour effectuer des échanges de données avec l'organe d'identification.

Le document US 5 030 928 décrit un dispositif d'émission d'un signal radiofréquence sous forme de succession d'oscillations à une première et une seconde fréquences. Ce signal radiofréquence est obtenu en effectuant une modulation de fréquence du signal délivré par un oscillateur à fréquence variable par une séquence numérique à deux états. Pour éviter que le signal de modulation ne génère des fréquences parasites dans le signal radiofréquence émis, ce document préconise que chaque donnée constituant la séquence numérique de modulation ne soit appliquée sur l'oscillateur que lors d'un passage à zéro du signal en sortie de l'oscillateur. Pour détecter ce passage à zéro, on génère un signal d'horloge de modulation à partir d'un compteur de période du signal radiofréquence émis.

Classiquement, le pilote, est alimenté par une batterie du véhicule, et reçoit successivement des consignes de fréquence d'émission, pour appliquer aux bornes de l'antenne émettrice des tensions alternatives ayant des fréquences correspondant aux fréquences de consigne pour que celle-ci émette un champ magnétique auxdites fréquences de consigne. Plus particulièrement, un tel dispositif émet selon une première et une seconde fréquence privilégiées de manière à échanger des données binaires avec l'organe d'identification, sur la base d'oscillations périodiques qui seront dans la suite indifféremment appelées signaux ou oscillations. Les circuits pilotes d'antenne connus comprennent généralement deux générateurs distincts produisant chacun des oscillations à une fréquence prédéterminée qui lui est propre dont les sorties respectives sont commutées par un micro-contrôleur en entrée de l'étage de puissance au fur et à mesure que le micro-contrôleur reçoit les consignes de commutation de fréquence. Dans ce type de circuit pilote d'antenne, les deux générateurs fonctionnent en permanence si bien qu'il n'est pas possible de synchroniser précisément le passage d'un signal à une première fréquence vers un signal à une seconde fréquence avec la fin d'une période du signal à la première fréquence. Le problème d'une telle commutation asynchrone est que le signal émis par l'antenne est parasité pendant une courte durée et présente des oscillations qui ne sont ni à la première fréquence ni à la seconde fréquence ce qui induit des erreurs dans la transmission des données entre le dispositif de reconnaissance et l'organe d'identification du système d'accès mains libres.

Le but de l'invention est de remédier à cet inconvénient en proposant un circuit pilote d'antenne émettrice d'un signal bi-fréquence à commutation de fréquence synchronisée.

A cet effet, l'invention a pour objet un circuit pilote d'antenne tel que défini dans les revendications 1 à 32.

Une telle construction fait que la commutation d'un signal à une première fréquence d'émission vers un signal à une seconde fréquence, et réciproquement peut être automatiquement synchronisée avec la fin de la période en cours pour éviter les effets de bords, tels que l'apparition d'un signal parasite au moment de la commutation.

Selon un mode de réalisation préféré de l'invention dans lequel ladite première fréquence est 125 kilo-Hertz, ladite seconde fréquence est 133 kilo-Hertz, et ladite fréquence d'émission d'impulsions de l'horloge interne est 20 Méga-Hertz, on obtient un dispositif pouvant émettre des données binaires tels que des trains de bits pour un coût de fabrication réduit.

Selon encore un autre mode de réalisation particulier de l'invention dans lequel ledit signal de commande est une succession de signaux carrés à ladite première fréquence et à ladite seconde fréquence, lesdits signaux carrés ayant chacun un rapport cyclique dépendant de la valeur de ladite tension d'alimentation, on obtient un circuit qui est capable d'émettre des signaux magnétiques alternatifs selon une amplitude indépendante de fluctuations de la tension d'alimentation.

L'invention sera maintenant décrite plus en détail, et en référence aux dessins annexés qui en illustrent une forme de réalisation à titre d'exemple non limitatif.

La figure 1 est une représentation schématique du circuit pilote d'antenne selon l'invention.

La figure 2 illustre d'une part une commutation de fréquence asynchrone dans l'art antérieur et, d'autre part, une commutation de fréquence synchronisée obtenue grâce au circuit pilote selon l'invention.

La figure 3 est un organigramme illustrant le fonctionnement du micro-contrôleur du circuit pilote selon l'invention.

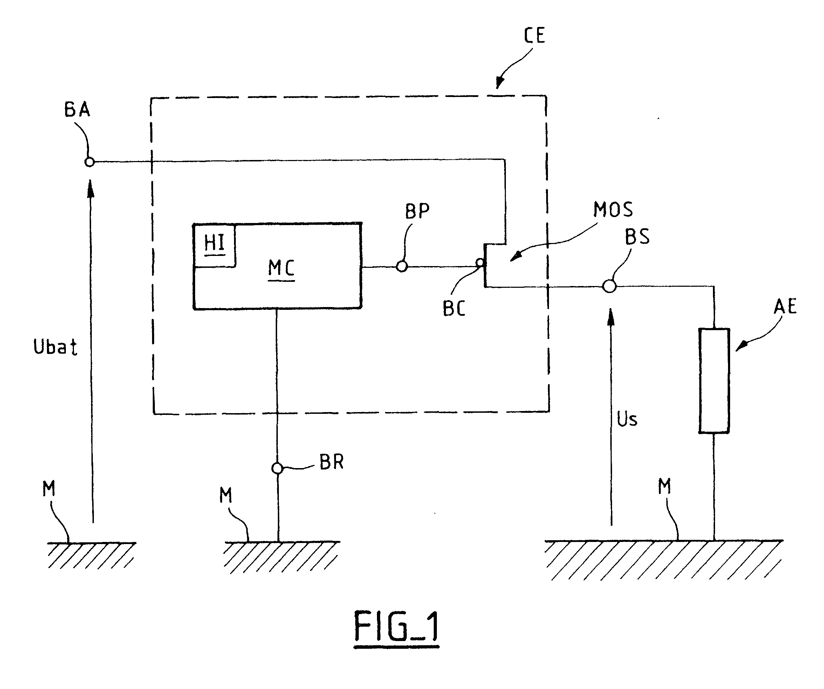

Dans la figure 1, on a représenté un circuit pilote d'antenne CE selon l'invention comprenant un micro-controleur MC ayant une horloge interne HI. Ce micro-contrôleur MC est connecté au niveau d'une borne BR à une masse M qui pourra être la masse du véhicule, et à une borne de pilotage BP, pour piloter un transistor MOS au niveau d'une borne de commande BC dudit transistor. Plus particulièrement, ce transistor MOS est connecté à une borne d'alimentation BA pour recevoir une tension d'alimentation Ubat qui peut être une tension délivrée par une batterie du véhicule, et à une borne de sortie BS du circuit selon l'invention, de manière à appliquer une tension d'excitation Us à une antenne émettrice de champ magnétique AE. Cette antenne est connectée entre la masse M et la borne de sortie BS de sorte que la tension d'excitation Us vaut Ubat lorsque le transistor MOS est fermé, et 0 lorsqu'il est ouvert. Ainsi, le micro-contrôleur peut générer sur sa borne de pilotage BP un signal de commande de manière à avoir Us = Ubat lorsque ce signal de commande est à un niveau haut, tel que par exemple 5 volts, et Us = 0 volt lorsque ce signal de commande est à un niveau bas tel que 0 volt. De cette façon, la tension d'excitation Us appliquée à l'antenne AE peut être une réplique d'un signal de commande carré généré par le micro-contrôleur MC, mais ayant pour amplitude Ubat. L'antenne émettrice AE pourra être selon le cas une simple bobine inductive pour émettre un champ magnétique, ou encore une antenne accordée pour que l'émission de champ magnétique soit optimisée pour les deux fréquences d'émission privilégiées.

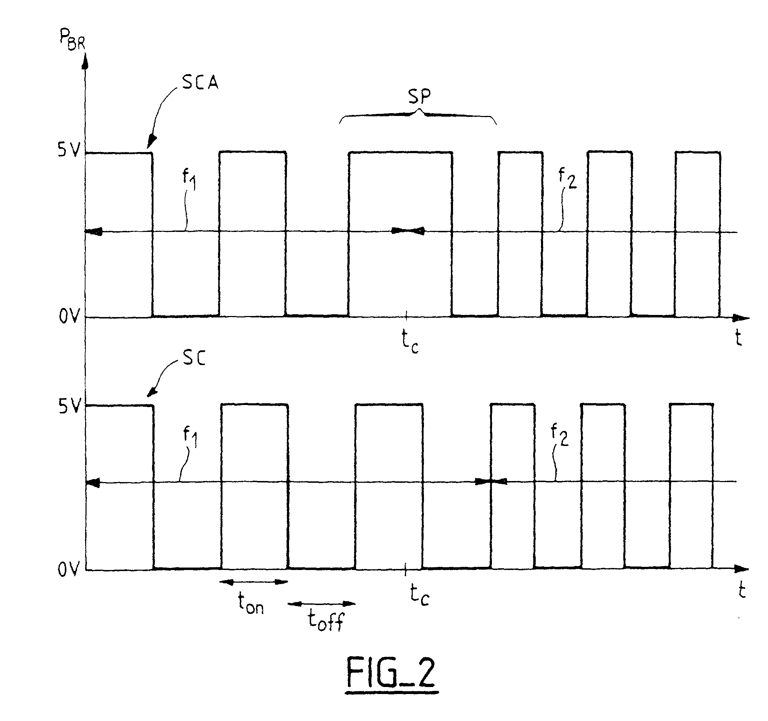

Dans la figure 2, on a représenté un diagramme comprenant un signal de commande SCA tel que réalisé dans l'art antérieur, et un signal de commande SC délivré par le circuit selon l'invention. Pendant une première plage de temps comprise entre t = 0 et t = tc, le signal SCA est un signal carré à la fréquence f1, puis après une commutation commandée à l'instant tc, ce signal est un signal carré à la fréquence f2. Plus particulièrement, les signaux SCA et SC sont des tensions variant entre 0 volt et 5 volts, destinées à piloter un étage de puissance tel que le transistor MOS décrit dans la figure 1. Comme on peut le remarquer, dans le signal SCA, à l'instant de commutation tc, un signal parasite SP est émis, et ce signal est une impulsion ayant une période plus longue que les périodes correspondant aux fréquences f1 et f2. Pour un organe d'identification comprenant par exemple une antenne accordée dans une bande passante comprenant les fréquences f1 et f2, un tel signal parasite SP ne correspond ni à la fréquence f1, ni à la fréquence f2, si bien qu'il est la source d'une perte de données dans la transmission. En travaillant avec f1 = 125 kHz, f2 = 133 kHz, et avec une alternance de fréquence toutes les 100 microsecondes, la perte de données est alors supérieure à 10%. Comme on le voit, une telle commutation de fréquence asynchrone n'est pas satisfaisante pour réaliser des échanges de données dans des conditions satisfaisantes.

Pour le signal SC qui est un signal de commande généré dans le circuit selon l'invention, la commutation de la fréquence f1 vers la fréquence f2 qui est demandée à l'instant tc au micro-contrôleur MC est réalisée avec un léger retard correspondant à l'attente de la fin de la période en cours si bien qu'il n'est pas généré de signal parasite, et que toutes les impulsions magnétiques correspondant au signal SC sont vues par un organe d'identification, puisque chacune d'elles correspond à la fréquence f1 ou à la fréquence f2.

Dans une variante du circuit selon l'invention, le micro-contrôleur MC pourra être connecté à la borne BA pour établir un signal de commande ayant un rapport cyclique fonction de la valeur de la tension Ubat. Plus particulièrement, le rapport cyclique du signal de commande pourra diminuer lorsque Ubat augmente et augmenter lorsque Ubat diminue. Une telle variante permet de faire en sorte que le courant crête traversant l'antenne émettrice ait une intensité crête correspondant à une intensité crête de référence, pour que l'amplitude du champ magnétique émis par l'antenne émettrice AE soit indépendante de fluctuations de la tension d'alimentation Ubat qui est fournie par la batterie du véhicule.

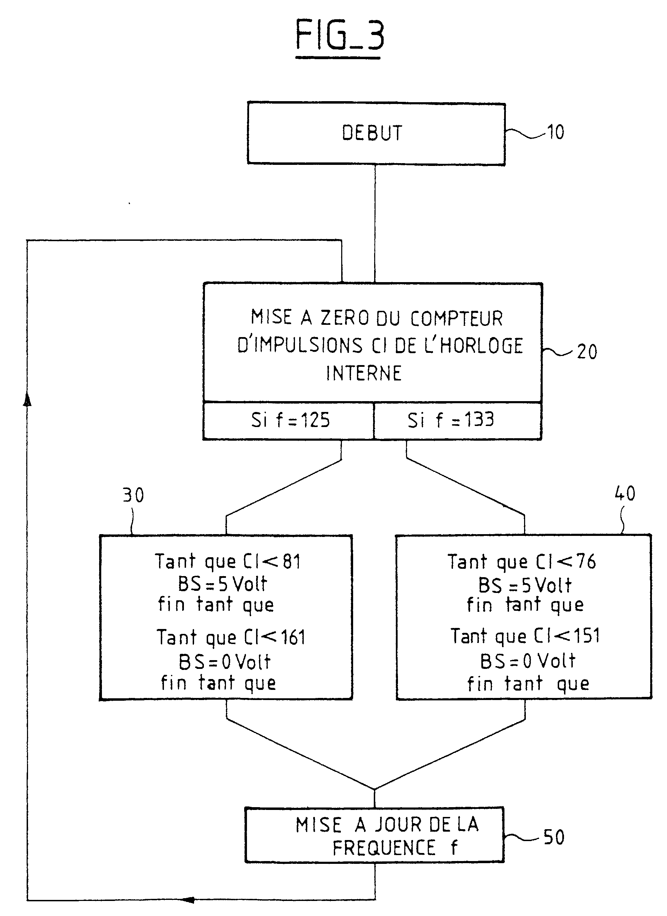

L'organigramme de la figure 3 illustre le fonctionnement du micro-contrôleur du circuit pilote selon l'invention. Le micro-contrôleur considéré comprend donc une horloge interne qui émet des impulsions à une fréquence fi valant 20 MHz et qui sert à fournir un signal de commande carré bi-fréquence pouvant avoir pour fréquence 125kHz ou 133 kHz. Cette horloge interne comprend un compteur d'impulsion Cl qui lui est associé, qui est incrémenté à chaque impulsion, et qui peut être remis à zéro. Avec de telles données, une période d'un signal à 125 kHz correspond à 160 impulsions de l'horloge interne, et une période d'un signal à 133 kHz à 150 impulsions de l'horloge interne.

Le programme du micro-contrôleur débute en 10 en réponse par exemple à un ordre de démarrage de l'émission du signal de commande SC. En 20, le micro-contrôleur met à zéro un compteur d'impulsions Cl tandis qu'un registre f est chargé avec une fréquence de consigne. Si la fréquence de consigne est 125 kHz, le programme se poursuit en 30 et si la fréquence de consigne est 133 kHz, le programme se poursuit en 40.

Le bloc 30 correspond à une routine du programme destinée à générer une période complète d'un signal de commande à 125 kHz et dans cette routine, le micro-contrôleur génère une tension de 5volt sur sa borne de sortie BS jusqu'à ce que le compteur d'impulsions Cl atteigne une valeur de comptage égale à 80, pour émettre une impulsion correspondant à une première demi-période d'une émission à 125 kHz et ensuite génère sur sa borne de sortie BS une tension de 0 volt jusqu'à ce que le compteur d'impulsion Cl atteigne une valeur de comptage égale à 160 de sorte qu'une période du signal de commande SC à la fréquence de 125 kHz est ainsi générée.

Le programme se poursuit en 50 par une mise à jour du registre f contenant la fréquence de consigne et retourne au bloc 20 afin de constituer une nouvelle période du signal de commande SC.

Le bloc 40 correspond à la routine du programme destinée à générer une période complète du signal de commande à 133 kHz. Cette routine 40 est analogue à la routine 30 mais avec un autre comptage des impulsions de l'horloge interne. Dans cette routine 40, le micro-contrôleur génère une tension de 5volt sur sa borne de sortie BS jusqu'à ce que le compteur d'impulsions Cl atteigne une valeur de comptage égale à 76, pour émettre une impulsion correspondant à une première demi-période d'une émission à 133 kHz et ensuite génère sur sa borne de sortie BS une tension de 0 volt jusqu'à ce que le compteur d'impulsion Cl atteigne une valeur de comptage égale à 151 de sorte qu'une première période du signal de commande SC à la fréquence de 135 kHz est ainsi générée. La routine 40 se poursuit en 50 pour la mise à jour de la fréquence de consigne.

On voit qu'ainsi, on obtient une commutation de fréquence synchronisée dans le signal de commande SC qui est simple à mettre en oeuvre par programme et qui ne nécessite pas de composants électroniques spécifiques.

## Revendications

1. Un circuit pilote d'antenne destiné à appliquer aux bornes d'une antenne émettrice (AE) une tension d'excitation (Us) qui est une succession d'oscillations à une première fréquence (f1) et d'oscillations à une seconde fréquence (f2), **caractérisé en ce qu'**il comporte :
- un transistor (MOS) qui reçoit une tension d'alimentation (Ubat) sensiblement continue et qui est piloté par un signal de commande (SC) de manière à délivrer ladite tension d'excitation (Us) qui est une réplique du signal de commande (SC) avec une amplitude correspondant à la tension d'alimentation (Ubat) ;
- un micro-contrôleur (MC) délivrant audit transistor ledit signal de commande, ledit micro-contrôleur (MC) ayant une horloge interne (HI) émettant des impulsions à une fréquence (f) très supérieure à ladite première fréquence (f1) et à ladite seconde fréquence (f2), et comprenant un compteur d'impulsions permettant de compter un premier nombre d'impulsions nécessaire à la production d'une période complète d'un signal de commande à la première fréquence (f1) et un second nombre d'impulsions nécessaire à la production d'une période complète d'un signal de commande à la seconde fréquence (f2), le micro-contrôleur étant programmé de façon à ne permettre une commutation de fréquence de la première fréquence vers la seconde fréquence ou de la seconde fréquence vers la première fréquence que lorsqu'une période complète d'un signal de commande à respectivement la première fréquence ou la seconde fréquence a été produite.
et **en ce que** ledit signal de commande (SC) est une succession de signaux carrés à ladite première fréquence (f1) et à ladite seconde fréquence (f2), lesdits signaux carrés ayant chacun un rapport cyclique dépendant de la valeur de ladite tension d'alimentation (Ubat).

2. Le circuit selon la revendication 1, dans lequel ladite première fréquence (f1) est 125 kilo-Hertz, ladite seconde fréquence (f2) est 133 kilo-Hertz, et ladite fréquence d'émission d'impulsions de l'horloge interne est 20 Méga-Hertz.

## Claims

1. An antenna drive circuit intended to apply to the terminals of a transmitting antenna (AE) an excitation voltage (Us) which is a succession of oscillations at a first frequency (f1) and of oscillations at a second frequency (f2), **characterized in that** it comprises:
- a transmitter (MOS) which receives a substantially continuous supply voltage (Ubat) and which is driven by a control signal (SC) in such a way as to deliver the said excitation voltage (Us) which is a replica of the control signal (SC) with an amplitude corresponding to the supply voltage (Ubat);
- a microcontroller (MC) delivering the said control signal to the said transistor, the said microcontroller (MC) having an internal clock (HI) transmitting pulses at a much greater frequency (f) than the said first frequency (f1) and than the said second frequency (f2), and comprising a pulse counter making it possible to count a first number of pulses that is necessary for the production of a complete period of a control signal at the first frequency (f1) and a second number of pulses that is necessary for the production of a complete period of a control signal at the second frequency (f2), the microcontroller being programmed in such a way as to allow a switchover of frequency from the first frequency to the second frequency or from the second frequency to the first frequency only when a complete period of a control signal at respectively the first frequency or the second frequency has been produced,
and **in that** the said control signal (SC) is a succession of square signals at the said first frequency (f1) and at the said second frequency (f2), the said square signals each having a duty ratio depending on the value of the said supply voltage (Ubat).

2. The circuit according to Claim 1, in which the said first frequency (f1) is 125 kilohertz, the said second frequency (f2) is 133 kilohertz, and the said pulse transmission frequency of the internal clock is 20 megahertz.

## Patentansprüche

1. Antennensteuerschaltung, die dazu bestimmt ist, an die Anschlüsse einer Sendeantenne (AB) eine Erregungsspannung (Us) anzulegen, die eine Folge von Oszillationen mit einer ersten Frequenz (f1) und von Oszillationen mit einer zweiten Frequenz (f2) ist, **dadurch gekennzeichnet, dass** sie umfasst:
- einen Transistor (MOS), der eine Versorgungsspannung (Ubat), die im wesentlichen eine Gleichspannung ist, empfängt und durch ein Steuersignal (SC) gesteuert wird, derart, dass er die Erregungsspannung (Us) liefert, die eine Kopie des Steuersignals (SC) mit einer der Versorgungsspannung (Ubat) entsprechenden Amplitude ist;
- einen Mikrocontroller (MC), der an den Transistor das Steuersignal liefert, wobei der Mikrocontroller (MC) einen internen Taktgeber (HI) besitzt, der Impulse mit einer Frequenz (f) liefert, die viel höher als die erste Frequenz (f1) und als die zweite Frequenz (f2) ist, und einen Impulszähler umfasst, der ermöglicht, eine erste Anzahl von Impulsen zu zählen, die für die Erzeugung einer vollständigen Periode eines Steuersignals mit der ersten Frequenz (f1) notwendig ist, und eine zweite Anzahl von Impulsen zu zählen, die für die Erzeugung einer vollständigen Periode eines Steuersignals mit der zweiten Frequenz (f2) notwendig ist, wobei der Mikrocontroller so programmiert ist, dass er eine Frequenzumschaltung von der ersten Frequenz zu der zweiten Frequenz oder von der zweiten Frequenz zu der ersten Frequenz nur zulässt, wenn eine vollständige Periode eines Steuersignals mit der ersten Frequenz bzw. mit der zweiten Frequenz erzeugt worden ist,
und dass das Steuersignal (SC) eine Folge von Rechtecksignalen mit der ersten Frequenz (f1) und mit der zweiten Frequenz (f2) ist, wobei die Rechtecksignale jeweils ein von dem Wert der Versorgungsspannung (Ubat) abhängendes Tastverhältnis besitzen.

2. Schaltung nach Anspruch 1, in der die erste Frequenz (f1) 125 Kilohertz beträgt, die zweite Frequenz (f2) 133 Kilohertz beträgt und die Sendefrequenz der Impulse des internen Taktgebers 20 Megahertz beträgt.
